# EUROPEAN PATENT SPECIFICATION

(11) **EP 3 813 184 B1**
(45) Date of publication and mention of the grant of the patent: **02.08.2023**
(21) Application number: 20200495.8
(22) Date of filing: 07.10.2020
(51) Int. Cl.: H01M 50/224, B60L 50/64, H01M 50/204, H01M 50/24, H01M 50/249, H01M 50/358, H01M 50/367, H01M 50/30, B60K 1/04

(54) **ELECTRIC SADDLED VEHICLE**
ELEKTRISCHES SATTELFAHRZEUG
VÉHICULE ÉLECTRIQUE À SELLE

(30) Priority: 21.10.2019 JP 2019192186
(43) Date of publication of application: 28.04.2021
(73) Proprietor: YAMAHA HATSUDOKI KABUSHIKI KAISHA, Iwata-shi Shizuoka 438-8501 (JP)
(72) Inventor: YAZAKI, Katsuya, Iwata-shi, Shizuoka, 438-8501 (JP); MOCHIZUKI, Toshiki, Iwata-shi, Shizuoka, 438-8501 (JP); UCHISAWA, Akinori, Iwata-shi, Shizuoka, 438-8501 (JP)
(74) Representative: Grünecker Patent- und Rechtsanwälte PartG mbB

(56) References cited:
- EP-A1- 1 724 858
- US-A- 5 477 936
- US-A1- 2010 163 326

## Description

The present invention relates to an electric saddled vehicle according to the preamble of independent claim 1. Such an electric saddled vehicle can be taken from the prior art document US 5 477 936 A.

An electric vehicle has a battery case in which a battery is housed (WO 2014/102853). The battery case has an exhaust port for releasing internal pressure when the interior is under high pressure.

At high temperatures, exhausting hot air from an exhaust port, due to pressure difference between inside and outside the battery case, has a problematic impact on comfortability for a rider.

It is the object of the present invention to provide an electric saddled vehicle that allows preventing decline in comfortability. According to the present invention said object is solved by an electric saddled vehicle having the figures of independent claim 1. Preferred embodiments are laid down in the dependent claims.

An electric saddled vehicle includes: a drive motor; a seat; and a battery including a battery cell for supplying power to the drive motor, the battery including a battery case under the seat and at a center in a vehicle width direction with a front face and a rear face intersecting with at least forward direction and a backward direction, the battery case storing the battery cell, the battery including an exhaust structure capable of pressure relief inside the battery case through an exhaust port in at least one of the front face and the rear face.

### BRIEF DESCRIPTION OF THE DRAWINGS

FIG. 1 is a side view of an electric saddled vehicle in an embodiment.
FIG. 2 is a side view of an internal structure of the electric saddled vehicle in FIG. 1.
FIG. 3 is a perspective view of a battery cell.
FIG. 4 is a front view of the internal structure in FIG. 2 except for a front wheel.
FIG. 5 is a V-V line cross-sectional view of the electric saddled vehicle in FIG. 1.
FIG. 6 is a detailed perspective view of a battery.
FIG. 7 is a partly enlarged perspective view of the electric saddled vehicle in FIG. 1.
FIG. 8 is partly enlarged cross-sectional view of the battery.

### DETAILED DESCRIPTION

The embodiment(s) of the present teaching is (are) described below with reference to the drawings. However, the present teaching can be implemented in various ways to the extent that it does not deviate from the main point of view, and is not to be construed as being limited to the description of the embodiment(s) exemplified below.

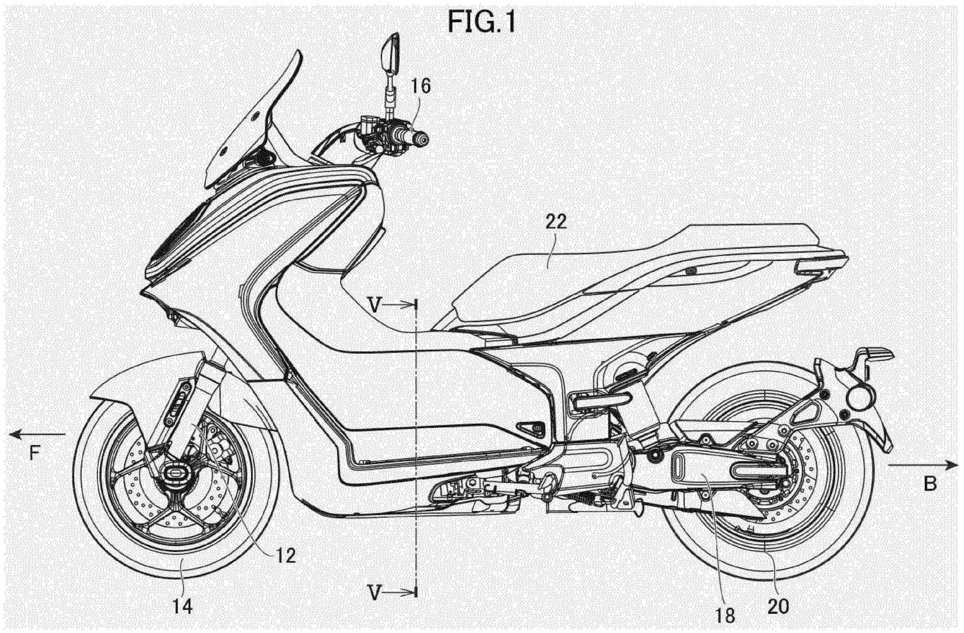

FIG. 1 is a side view of an electric saddled vehicle in an embodiment. The electric saddled vehicle is an electric motorcycle with any number of wheels. The electric saddled vehicle may be a four-wheel vehicle for driving on irregular terrain. The electric saddled vehicle may be an on-road type, an off-road type, or a scooter type.

In the embodiment, a direction is based on a straight forward direction of the electric saddled vehicle. For example, arrows F and B in FIG. 1 represent a forward direction and a backward direction, respectively. Upper and lower directions are based on the forward direction, and right and left directions are based on the forward direction.

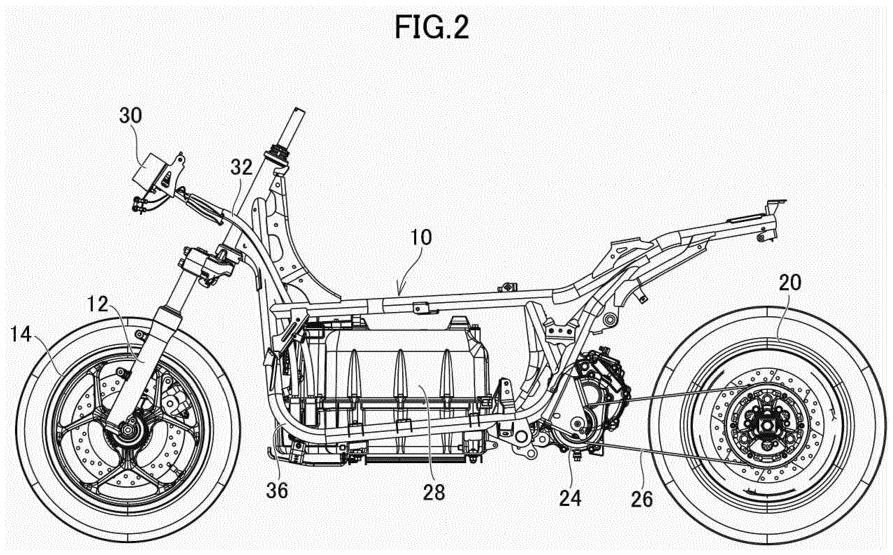

FIG. 2 is a side view of an internal structure of the electric saddled vehicle in FIG. 1. The electric saddled vehicle has a frame 10. A front fork 12 is supported at a front end of the frame 10 and is rotatable in the right and left directions. A front wheel 14 is rotatably supported at a bottom end of the front fork 12. A handle 16 (FIG. 1) is disposed on a top end of the front fork 12 for steering. A rear unit 18 is supported at a lower rear portion of the frame 10 and is swingable in the upper and lower directions. A rear wheel 20 is rotatably supported at a rear end of the rear unit 18. A seat 22 (FIG. 1) for a driver to sit is disposed at an upper rear portion of the frame 10.

The electric saddled vehicle has a drive motor 24 for driving a rear wheel 20 of a driving wheel. The drive motor 24 may be a three-phase alternating-current motor. The drive motor 24 is supported by the frame 10. The drive motor 24 transmits driving force to the rear wheel 20 through a transmission member such as a belt 26. Alternatively, the drive motor 24 may drive the front wheel 14, or drive both the front wheel 14 and the rear wheel 20.

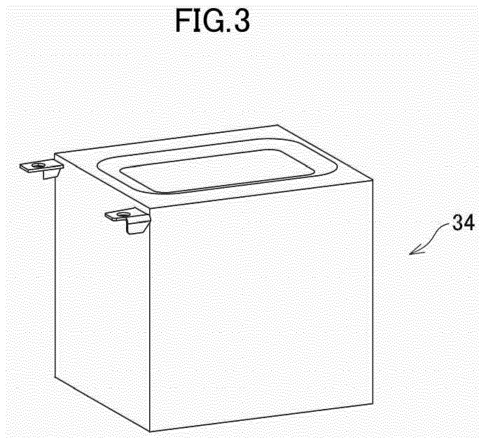

The electric saddled vehicle has a battery 28. The battery 28 is positioned under the seat 22. The charge connector 30 is electrically connected to the battery 28 through a cable 32. For charging, a power supply plug (not shown) is inserted in the charge connector 30. The battery 28 has a battery cell 34 in FIG. 3.

FIG. 3 is a perspective view of a battery cell 34. The battery 28 has a battery cell 34 (e.g. lithium-ion battery) for supplying power to the drive motor 24. Typical lithium-ion batteries use lithium cobalt oxide, which emits gas (oxygen) and particles when crystal structure decays.

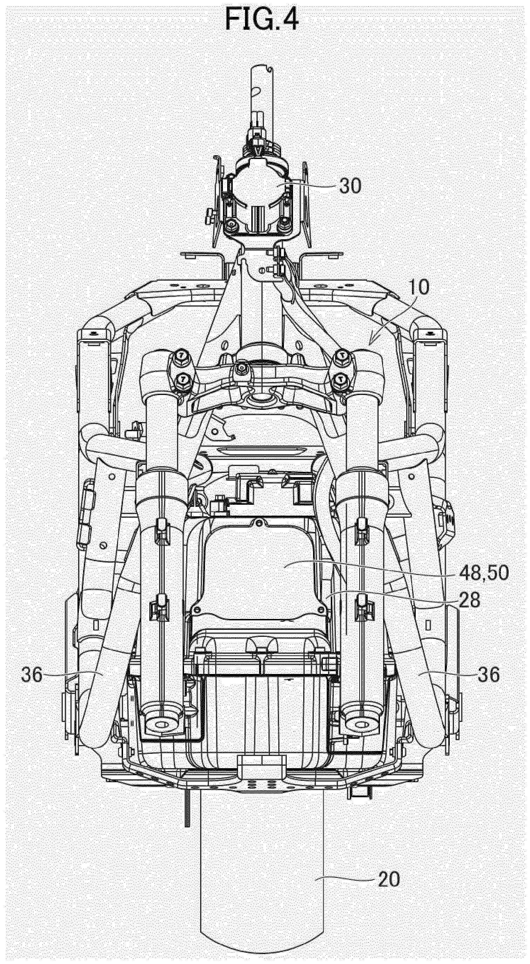

FIG. 4 is a front view of the internal structure in FIG. 2 except for a front wheel. The frame 10 includes a pair of down tubes 36 spaced in a vehicle width direction. The battery 28 is between a pair of down tubes 36 of the frame 10. That is, the battery 28 is protected by the down tube 36 outside it. The battery 28 is under the seat 22 at a center in the vehicle width direction.

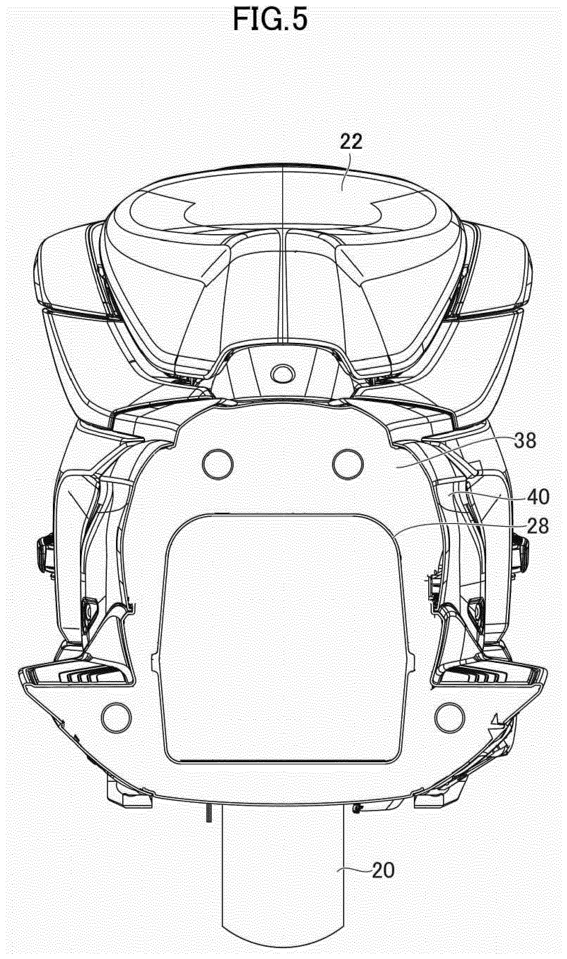

FIG. 5 is a V-V line cross-sectional view of the electric saddled vehicle in FIG. 1. The battery 28 is disposed in the center tunnel 38. The center tunnel 38 is a space partitioned by a vehicle body cover 40.

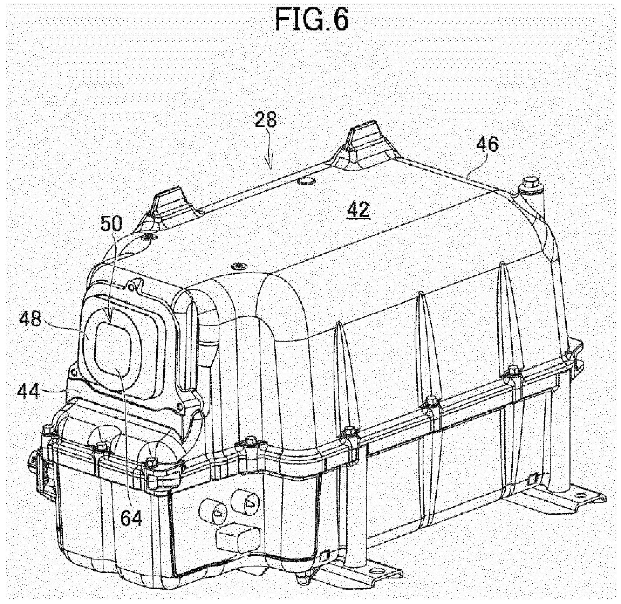

FIG. 6 is a detailed perspective view of a battery 28. The battery 28 has a battery case 42. The battery case 42 stores a battery cell 34 (FIG. 3). The battery case 42 may be made of aluminum, resin, or other materials. The battery case 42 is under the seat 22 and at a center in the vehicle width direction (FIG. 5). The battery case 42 has a front face 44 disposed to face at least the forward direction (arrow F in FIG. 1). The battery case 42 has a rear face 46 disposed to face at least the backward direction (arrow B in FIG. 1). The battery 28 has an exhaust port 48 for pressure relief inside the battery case 42.

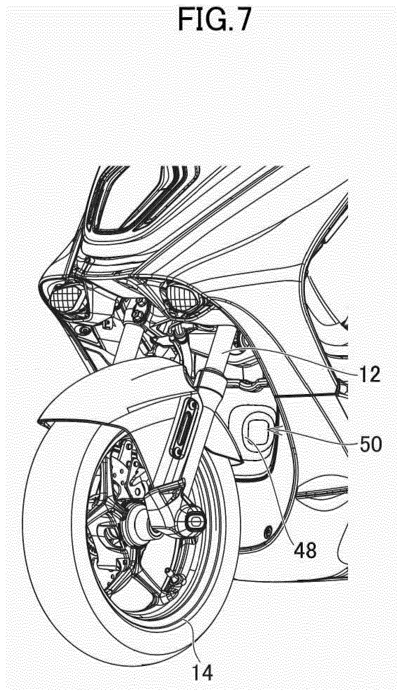

FIG. 7 is a partly enlarged perspective view of the electric saddled vehicle in FIG. 1. The exhaust port 48 is opposed to at least one of the front wheel 14 and the rear wheel 20. The exhaust port 48 may face either diagonally upward or diagonally downward. The exhaust port 48 faces a direction not to be opposed to the frame 10. A center in the vehicle width direction is positioned within a range of the exhaust port 48. The exhaust port 48 is disposed not to face the vehicle width direction. In the embodiment, the exhaust port 48 does not face the rider, preventing decline in comfortability.

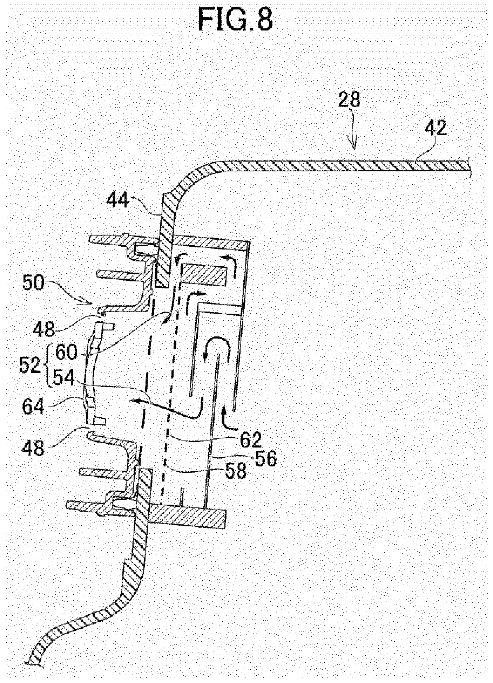

FIG. 8 is partly enlarged cross-sectional view of the battery 28. The battery 28 has an exhaust structure 50. The exhaust structure 50 is attached in the opening of the battery case 42. The exhaust structure 50 enables pressure relief inside the battery case 42 through the exhaust port 48. The exhaust port 48 is positioned in at least one of the front face 44 and rear face 46 of the battery case 42.

The exhaust structure 50 has a route 52 in a labyrinth structure to the exhaust port 48. The route 52 has a main passage 54. There is a partition 56 in the main passage 54 for blocking a flow straight to the exhaust port 48, and the route 52 curves. The main passage 54 is a straight route toward the exhaust port 48 downstream from the curved route 52. There is a filter 58 capable of capturing particles in the main passage 54. The partition 56 is opposed to and spaced from the filter 58. Fluids flowing in the main passage 54 always pass through the filter 58.

The route 52 includes a circuitous route 60. The circuitous route 60 branches off from main passage 54 without passing through the filter 58. The circuitous route 60 can secure a ventilation path to outside when the main passage 54 is closed due to clogging of the filter 58. The circuitous route 60 is also a curved route. The circuitous route 60 merges with the main passage 54 before the exhaust port 48 (downstream from the filter 58).

There is a metal mesh 62 in the main passage 54 so as to be opposed to and outside the filter 58. The metal mesh 62 is coarser than the filter 58 and serves mainly for preventing foreign objects from entering. A membrane (not shown), breathable but water-impermeable, is attached to the metal mesh 62 outside. An exhaust cover 64 is disposed outside the metal mesh 62. The exhaust port 48 is a hole with an opening area formed in the exhaust cover 64.

## Claims

1. An electric saddled vehicle comprising:
a drive motor (24);
a seat (22); and
a battery (28) including a battery cell (34) configured for supplying power to the drive motor (24), the battery (28) including a battery case (42) under the seat (22) with regards to a vehicle up-down direction and at a center in a vehicle width direction with a front face (44) and a rear face (46) intersecting with at least forward direction and a backward direction, the battery case (42) storing the battery cell (34), the battery (28) including an exhaust structure (50) capable of pressure relief inside the battery case (42) through an exhaust port (48) in at least one of the front face (44) and the rear face (46), **characterized in that** the exhaust structure (50) includes a route (52) in a labyrinth structure to the exhaust port (48), wherein the route (52) includes a main passage (54) with a filter (58) capable of capturing particles and a circuitous route (60) branching off from the main passage (54) so as to avoid the filter (58).

2. The electric saddled vehicle according to claim 1, **characterized in that** the electric saddled vehicle has a center in the vehicle width direction within an opening area of the exhaust port (48).

3. The electric saddled vehicle according to claim 1 or 2, **characterized in that** the battery case (42) is made of aluminum or resin and has an opening to which the exhaust structure (50) is attached.

4. The electric saddled vehicle according to any one of claims 1 to 3, **characterized by** a front wheel (14) and a rear wheel (20),
wherein the exhaust port (48) is opposed to at least one of the front wheel (14) and the rear wheel (20) with regards to a vehicle forward-backward direction.

5. The electric saddled vehicle according to any one of claims 1 to 4, **characterized in that** the exhaust port (48) faces either diagonally upward or diagonally downward with regards to the vehicle up-down direction.

6. The electric saddled vehicle according to any one of claims 1 to 5, **characterized by** a frame (10) including a pair of down tubes (36) spaced in the vehicle width direction, wherein the battery (28) intervenes between the pair of down tubes (36) of the frame (10).

7. The electric saddled vehicle according to claim 6, **characterized in that** the exhaust port (48) faces a direction that is not opposed to the frame (10).

8. The electric saddled vehicle according to any one of claims 1 to 7, **characterized in that** the circuitous route (60) merges with the main passage (54) before the exhaust port (48).

9. The electric saddled vehicle according to any one of claims 1 to 8, **characterized by** a metal mesh (62) opposed to and outside the filter (58).

## Patentansprüche

1. Ein Elektro-Sattel-Fahrzeug, das umfasst:
einem Antriebsmotor (24);
einen Sitz (22); und
eine Batterie (28), die eine Batteriezelle (34) enthält, die konfiguriert ist, um den Antriebsmotor (24) mit Strom zu versorgen, die Batterie (28) enthält ein Batteriegehäuse (42) unter dem Sitz (22) in Bezug auf eine Fahrzeug-Aufwärts-Abwärts-Richtung und in einer Mitte in einer Fahrzeug-Breiten-Richtung mit eine vordere Fläche (44) und eine hintere Fläche (46), die sich zumindest in einer Vorwärtsrichtung und einer Rückwärtsrichtung schneiden, das Batteriegehäuse (42) nimmt die Batteriezelle (34) auf, die Batterie (28) enthält eine Auslassstruktur (50), die in der Lage ist, den Druck innerhalb des Batteriegehäuses (42) durch eine Auslassöffnung (48) in zumindest einer der vorderen Fläche (44) und der hinteren Fläche (46) zu entlasten, **dadurch gekennzeichnet, dass** die Auslassstruktur (50) einen Weg (52) in einer Labyrinth-Struktur zu der Auslassöffnung (48) aufweist, wobei der Weg (52) einen Hauptdurchgang (54) mit einem Filter (58), der in der Lage ist, Partikel aufzufangen, und einen Umgehungsweg (60) aufweist, der von dem Hauptdurchgang (54) abzweigt, um den Filter (58) zu umgehen.

2. Das Elektro-Sattel-Fahrzeug gemäß Anspruch 1, **dadurch gekennzeichnet, dass** das Elektro-Sattel-Fahrzeug eine Mitte in Fahrzeug-Breiten-Richtung innerhalb eines Öffnungsbereichs der Auslassöffnung (48) aufweist.

3. Das Elektro-Sattel-Fahrzeug gemäß Anspruch 1 oder 2, **dadurch gekennzeichnet, dass** das Batteriegehäuse (42) aus Aluminium oder Harz besteht und eine Öffnung aufweist, an der die Auslassstruktur (50) angebracht ist.

4. Das Elektro-Sattel-Fahrzeug gemäß irgendeinem der Ansprüche 1 bis 3, **gekennzeichnet durch** ein Vorderrad (14) und ein Hinterrad (20),
wobei die Auslassöffnung (48) dem Vorderrad (14) und/oder dem Hinterrad (20) in Bezug auf eine Fahrzeug-Vorwärts-Rückwärts-Richtung gegenüberliegt.

5. Das Elektro-Sattel-Fahrzeug gemäß irgendeinem der Ansprüche 1 bis 4, **dadurch gekennzeichnet, dass** die Auslassöffnung (48) entweder schräg nach oben oder schräg nach unten in Bezug auf die Fahrzeug-Aufwärts-Abwärts-Richtung gewandt ist.

6. Das Elektro-Sattel-Fahrzeug gemäß irgendeinem der Ansprüche 1 bis 5, **gekennzeichnet durch** einen Rahmen (10), der ein Paar von Unterrohren (36) enthält, die in Fahrzeug-Breiten-Richtung beabstandet sind,
wobei die Batterie (28) zwischen dem Paar von Unterrohren (36) des Rahmens (10) liegt.

7. Das Elektro-Sattel-Fahrzeug gemäß Anspruch 6, **dadurch gekennzeichnet, dass** die Auslassöffnung (48) in eine Richtung gewandt ist, die dem Rahmen (10) nicht entgegengesetzt ist.

8. Das Elektro-Sattel-Fahrzeug gemäß irgendeinem der Ansprüche 1 bis 7, **dadurch gekennzeichnet, dass** der Umgehungsweg (60) vor der Auslassöffnung (48) in den Hauptdurchgang (54) mündet.

9. Das Elektro-Sattel-Fahrzeug gemäß irgendeinem der Ansprüche 1 bis 8, **gekennzeichnet durch** ein Metallgitter (62), das dem Filter (58) gegenüberliegt und sich außerhalb desselben befindet.

## Revendications

1. Véhicule électrique à selle comprenant :
un moteur électrique d'entraînement (24),
un siège (22), et
une batterie (28) incluant un élément de batterie (34) configuré pour fournir de l'énergie au moteur d'entraînement (24), la batterie (28) incluant un boîtier de batterie (42) sous le siège (22) par rapport à la direction haut bas du véhicule et au centre dans la direction de la largeur du véhicule, présentant une face avant (44) et une face arrière (46) se coupant avec au moins la direction vers l'avant et la direction vers l'arrière, le boîtier de batterie (42) stockant l'élément de batterie (34), la batterie (28) incluant une structure d'échappement (50) autorisant une détente de pression à l'intérieur du boîtier de batterie (42) au travers d'un orifice d'échappement (48) dans au moins l'une de la face avant (44) et de la face arrière (46), **caractérisé en ce que** la structure d'échappement (50) inclut un itinéraire (52) dans une structure de labyrinthe de l'orifice d'échappement (48), l'itinéraire (52) incluant un passage principal (54) comportant un filtre (58) pouvant capturer des particules, ainsi qu'un itinéraire sinueux (60) bifurquant à partir du passage principal (54) de sorte à éviter le filtre (58).

2. Véhicule électrique à selle selon la revendication 1, **caractérisé en ce que** le véhicule électrique à selle comporte un centre dans la direction de la largeur du véhicule à l'intérieur d'une zone ouvrante de l'orifice d'échappement (48).

3. Véhicule électrique à selle selon la revendication 1 ou la revendication 2, **caractérisé en ce que** le boîtier de batterie (42) est constitué d'aluminium ou d'une résine et comporte une ouverture à laquelle est fixée la structure d'échappement (50).

4. Véhicule électrique à selle selon l'une quelconque des revendications 1 à 3, **caractérisé par** une roue avant (14) et une roue arrière (20),
dans lequel l'orifice d'échappement (48) est opposé à au moins l'une de la roue avant (14) et de la roue arrière (20) par rapport à la direction avant arrière du véhicule.

5. Véhicule électrique à selle selon l'une quelconque des revendications 1 à 4, **caractérisé en ce que** l'orifice d'échappement (48) fait face soit en diagonale vers le haut, soit en diagonale vers le bas par rapport à la direction haut bas du véhicule.

6. Véhicule électrique à selle selon l'une quelconque des revendications 1 à 5, **caractérisé par** un cadre (10) incluant une paire de tubes descendants (36) espacés dans la direction de la largeur du véhicule, la batterie (28) intercalant entre la paire de tubes descendants (36) du cadre (10) .

7. Véhicule électrique à selle selon la revendication 6, **caractérisé en ce que** l'orifice d'échappement (48) fait face dans une direction qui n'est pas opposée au cadre (10).

8. Véhicule électrique à selle selon l'une quelconque des revendications 1 à 7, **caractérisé en ce que** l'itinéraire sinueux (60) fusionne avec le passage principal (54) avant l'orifice d'échappement (48).

9. Véhicule électrique à selle selon l'une quelconque des revendications 1 à 8, **caractérisé par** un treillis métallique (62) en face du filtre (58) et à l'extérieur de celui-ci.
